# EUROPÄISCHE PATENTSCHRIFT

(11) **EP 0 878 120 B1**
(45) Veröffentlichungstag und Bekanntmachung des Hinweises auf die Patenterteilung: **16.08.2001**
(21) Anmeldenummer: 98108303.3
(22) Anmeldetag: 07.05.1998
(51) Int. Cl.: A01D 34/66, A01D 75/18

(54) **Mähmaschine**
Mowing machine
Faucheuse

(30) Priorität: 17.05.1997 DE 19720956
(43) Veröffentlichungstag der Anmeldung: 18.11.1998
(73) Patentinhaber: Maschinenfabrik Bernard Krone GmbH, 48480 Spelle (DE)
(72) Erfinder: Krone, Bernard, 48480 Spelle (DE); Horstmann, Josef, Dipl.-Ing., 49479 Ibbenbüren (DE)

(56) Entgegenhaltungen:
- EP-A- 0 366 580
- EP-A- 0 777 958
- US-A- 3 044 241

## Beschreibung

Die vorliegende Erfindung bezieht sich auf eine Mähmaschine, insbesondere ein Scheibenmähwerk gemäß dem Oberbegriff des Anspruchs 1. Derartige Mähmaschinen sind für sich bekannt und werden hauptsächlich beim Ernten von Gras oder dgl. Erntegüter eingesetzt. Im Betrieb können sie beispielsweise an eine Anhängevorrichtung eines landwirtschaftlichen Ackerschleppers oder dgl. Zugmaschinen angehängt werden, wobei ihre rotierenden Schneidorgane von der Zapfwelle des landwirtschaftlichen Ackerschleppers aus antreibbar sind. Die Schneidorgane sind dabei als Mähteller ausgeführt, die an ihrem Umfang zumindest zwei drehbeweglich angebrachte und infolge der Fliehkraft radial nach außen stehende, als Mähklingen ausgebildete Schneidwerkzeuge aufweisen. Damit die Mähklingen eine Schneidwirkung erzeugen, ist es notwendig, die als Mähteller ausgeführten Schneidorgane mit einer sehr hohen Drehzahl anzutreiben, die in einem Bereich von 3000 bis 3200 U/min oder sogar noch höher liegt.

Während des Mäheinsatzes ist es nicht auszuschließen, daß die rotierenden Schneidorgane mit einem Hindernis, wie beispielsweise Steine in Berührung kommen. Dabei wird das betroffene Schneidorgan schlagartig abgebremst, während die Mähmaschine vom Ackerschlepper weiterhin angetrieben wird. Auf das Antriebsorgan des blokkierten Schneidorganes entlädt sich dann die aufgrund der Masse und der hohen Drehgeschwindigkeit in den übrigen nicht blockierten Schneidorganen gespeicherte kinetische Rotationsenergie und die vom Ackerschlepper gelieferte Antriebsenergie und verursacht dabei Brüche an den aus Zahnrädern bestehenden Antriebsorganen. Derartige Schäden können nur durch aufwendige Reparaturen mit längeren Stillstandzeiten und hohen Kosten behoben werden.

In der EP 0 366 580 B1 wird zur Vermeidung dieses Problems vorgeschlagen, die die Schneidorgane mit den Antriebsorganen verbindende Welle mit einer oberhalb ihrer Lagerung angeordneten und als Nut ausgeführten Bruchzone zu versehen. Hierdurch tritt bei einem Aufprall eines Schneidorganes auf ein Hindernis der Bruch nicht an den Zahnrädern der Antriebsorgane sondern im Bereich der Bruchzone (Sollbruchstelle) der Welle auf, so daß die Antriebsverbindung zwischen den Schneidorganen und den Antriebsorganen der Mähmaschine unterbrochen ist. Das bedeutet jedoch, daß bei einem Bruch der Welle die Schneidorgane keinerlei Verbindung mehr zur Mähmaschine aufweisen und somit von der Mähmaschine wegfliegen können. Von einer derartigen Konstruktion gehen also erhebliche Sicherheitsrisiken aus.

Aufgabe der vorliegenden Erfindung ist es daher, eine Mähmaschine, insbesondere ein Scheibenmähwerk der vorstehend genannten Art zu schaffen, bei der mittels einer kostengünstigen und sicherheitstechnisch unbedenklichen Einrichtung die Antriebselemente der Schneid- bzw. Mähorgane gegen Gewaltbrüche oder dgl. Beschädigungen geschützt werden, welche während eines kurzzeitigen Aufpralls eines Schneidorganes auf ein feststehendes Hindernis auftreten können.

Diese Aufgabe wird erfindungsgemäß durch die im kennzeichnenden Teil des Anspruches 1 aufgeführten Merkmale gelöst. Hinsichtlich der weiteren Ausgestaltung der Erfindung wird auf die Ansprüche 2 bis 8 verwiesen.

Bei einer gattungsgemäßen Mähmaschine befinden sich auf einem Mähholm mehrere nebeneinander angeordnete, um eine aufrechtstehende Achse rotierende Schneidorgane, die an ihrem Umfang zumindest zwei drehbeweglich angebrachte, als Mähklingen ausgeführte und durch die Fliehkraft bei der Rotation mit hoher Drehzahl radial nach außen stehende, eine Schneidwirkung erzeugende Schneidwerkzeuge aufweisen. Die Antriebsdrehzahl der Schneidorgane liegt dabei in einem Bereich von 3000 bis 3200 U/min.

Diese Schneidorgane werden dabei von Antriebsorganen angetrieben, welche innerhalb des Mähholmes untergebracht sind und Zahnräder umfassen. Mittels einer Welle, die mit einem der im Mähholm untergebrachten Zahnräder fest verbunden ist, sowie weiterer Verbindungselemente wird eine Antriebsverbindung zwischen den Antriebsorganen im Mähholm und den Schneidorganen hergestellt.

Erfindungsgemäß umfaßt diese Antriebsverbindung ein konstruktiv einfach aufgebautes Übertragungselement, welches beim schlagartigen Blockieren eines Schneidorganes, beispielweise beim Aufprall auf einen Stein oder dgl. Hindernisse die Antriebsverbindung zwischen den im Mähholm untergebrachten Antriebsorganen und den Schneidorganen unterbricht. Damit in einem solchen Fall keine Beschädigungen an den Berührungsstellen zwischen dem antreibenden Abschnitt und dem angetriebenen Abschnitt des Übertragungselementes entstehen, ist es nach der Erfindung vorgesehen, den angetriebenen Abschnitt gegenüber dem antreibenden Abschnitt, vorzugsweise durch Wälzlager drehbar zu lagern. Das Übertragungselement kann dabei als Verbindungselement zwischen dem als Welle ausgeführten antreibenden Abschnitt und dem als Nabe des Schneidorganes ausgebildeten angetriebenen Abschnitt oder zwischen dem als Zahnrad im Mähholm ausgeführten antreibenden Abschnitt und dem als Welle ausgebildeten angetriebenen Abschnitt angeordnet sein. Eine vorteilhafte und kostengünstige Ausbildung der Erfindung geht davon aus, daß das Übertragungselement so aufgebaut ist, daß der angetriebene Abschnitt über ein Abschersicherungselement mit dem antreibenden Abschnitt verbunden ist, wobei als Abschersicherungselement vorzugsweise eine Spannhülse vorgesehen ist.

Im Falle einer heftigen Stoß- oder Schlagbelastung, hervorgerufen beispielsweise durch den Aufprall eines Schneidorganes auf einen Stein oder dgl. Hindernisse wird nun bei der Entladung der von den übrigen nicht blockierten Schneidorganen gespeicherten kinetischen Rotationsenergie sowie der weiterhin bereitgestellten Antriebsenergie durch das Abscheren des Abschersicherungselementes die Antriebsverbindung zwischen den Antriebsorganen und den Schneidorganen unterbrochen. In diesem Moment tritt eine Relativbewegung zwischen dem antreibenden Abschnitt und dem angetriebenen Abschnitt des Übertragungselementes ein, deren Drehzahl binnen kürzester Zeit von 0 auf über 3000 U/min ansteigt. Daher sind zur Lagerung des angetriebenen Abschnittes gegenüber dem antreibenden Abschnitt des Übertragungselementes Wälzlager vorgesehen, wobei es sich vorzugweise um Rillenkugellager handelt. Ein Einsatz von Gleitlagern ist hier nicht angebracht, da unter den genannten Voraussetzungen (hohe Drehzahlen und keine ausreichende Schmierung) mit der sofortiger Zerstörung der Gleitlager zu rechnen ist.

Wie bereits erwähnt, sieht eine vorteilhafte Ausbildung der Erfindung vor, den als Welle ausgeführten antreibenden Abschnitt und den als Nabe des Schneidorganes ausgebildeten angetriebenen Abschnitt mit einem aus einer Spannhülse bestehenden Abschersicherungselement zu verbinden. Beidseitig von der Spannhülse sind dabei Rillenkugellager angebracht, so daß im Falle einer Unterbrechung der Antriebsverbindung (Abscheren der Spannhülse) eine einwandfreie Lagerung der Nabe des Schneidorganes auf der Welle gewährleistet ist. Wie aus der Praxis bekannt, liegen die erreichbaren Abscherkräfte bei der Verwendung einer Spannhülse als Abschersicherungselement in einem günstigen Bereich, so daß deshalb die Verwendung einer Spannhülse anstelle sonstiger Abschersicherungselemente vorteilhaft ist. Damit auch im Falle der Unterbrechung der Antriebsverbindung eine axiale Sicherung der Nabe des Schneidorganes auf der Welle erhalten bleibt, ist eine zusätzliche Sicherungsschraube vorgesehen, welche an der Oberseite der Welle angebracht ist.

Ein weiterer vorteilhafter Aspekt der Erfindung sieht vor, die Lage der als Abschersicherungselement verwendeten Spannhülse in Bezug zu Befestigungsschrauben des als Mähteller ausgebildeten Schneidorganes auf der Nabe so zu wählen, daß ein Austritt der Spannhülse aus der Aufnahmebohrung der Nabe im montierten Zustand nicht möglich ist.

Eine detaillierte Beschreibung des Gegenstandes der Erfindung erfolgt nun anhand eines Ausführungsbeispieles. In der Zeichnung stellt im einzelnen dar:
- Fig.1: eine teilweise abgebrochene Draufsicht einer erfindungsgemäßen Mähmaschine;
- Fig.2: eine teilweise abgebrochene, vergrößerte Darstellung der Einzelheit X in Fig.1;
- Fig.3: eine Schnittdarstellung eines Ausführungsbeispieles einer Antriebsverbindung eines Schneidorganes mit einem Antriebsorgan gemäß Schnitt III - III in Fig.2;

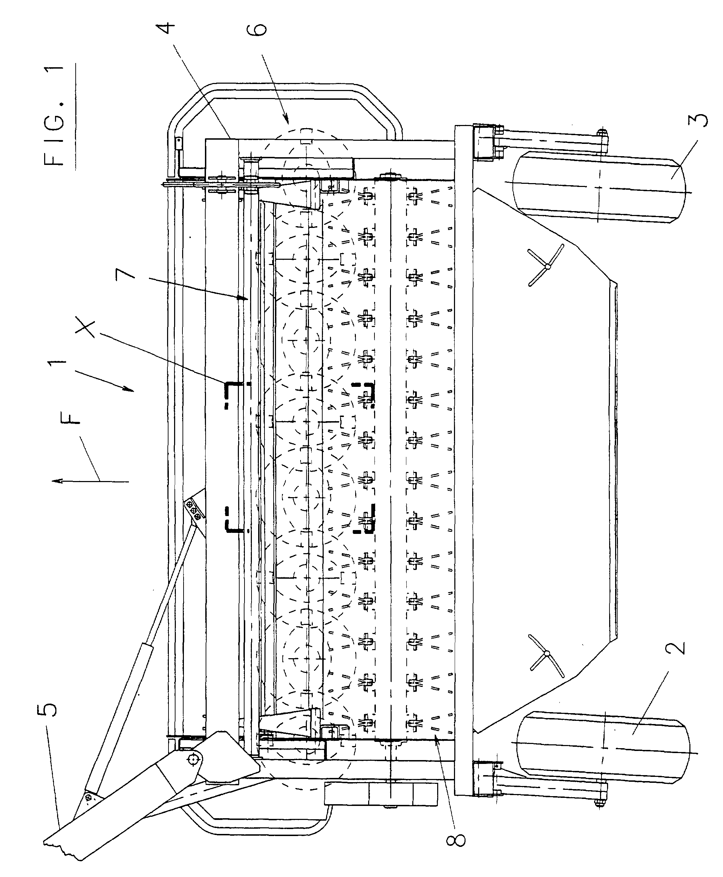

Eine erfindungsgemäße Mähmaschine 1, insbesondere ein Scheibenmähwerk zum Ernten von Gras oder dgl. Erntegüter ist in Fig.1 dargestellt und besteht im wesentlichen aus einem sich über Laufräder 2,3 gegenüber dem Erdboden abstützenden Hauptrahmen 4, der mittels einer schwenkbaren Deichsel 5 an eine Anhängevorrichtung eines nicht dargestellten landwirtschaftlichen Ackerschleppers oder dgl. Zugmaschine angehängt werden kann. Eine mit mehreren, quer zur Fahrt- und Arbeitsrichtung F angeordneten Schneidorganen 6 besetzte Mäheinheit 7 sowie eine dieser nachgeordneten Förder- und Aufbereitungsvorrichtung 8 sind am Hauptrahmen 4 der Mähmaschine 1 angebracht. Der Gegenstand der Erfindung beschränkt sich dabei keineswegs nur auf das in Fig.1 dargestellte Ausführungsbeispiel. Gleichermaßen ist es möglich der Erfindung eine Mähmaschine mit einer anderen Bauart zugrunde zu legen, beispielsweise eine Mähmaschine, die für den Front- bzw. Heckanbau an eine Hubvorrichtung eines landwirtschaftlichen Ackerschleppers vorgesehen ist. Über nicht näher bezeichnete hydraulische Hebemittel kann die Mäheinheit 7 mit der Förder- und Aufbereitungsvorrichtung 8 aus einer Transportstellung in eine Arbeits- und Betriebsstellung abgesenkt werden bzw. aus der Arbeits- und Betriebsstellung nach einem Mäheinsatz in die Transportstellung angehoben werden.

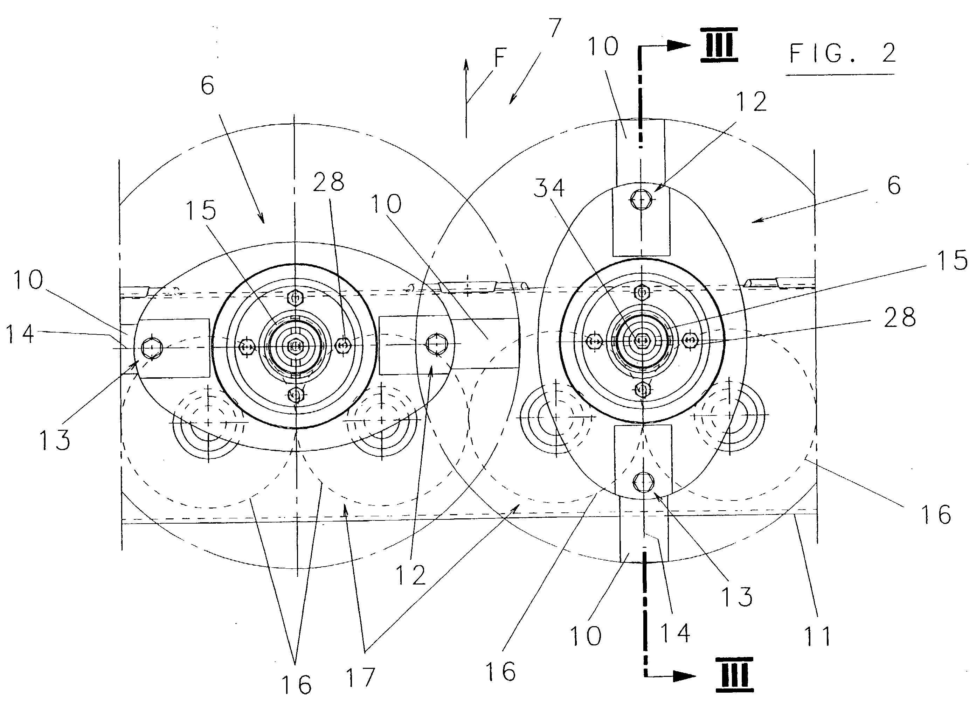

In einem in Fig.2 veranschaulichten Teilabschnitt der Mäheinheit 7 sind zwei als Mähteller 9 ausgebildete Schneidorgane 6 dargestellt, die an ihrem Umfang zwei drehbeweglich angeordnete und als Mähklingen 10 ausgeführte Schneidwerkzeuge aufweisen und in einem Mähholm 11 gelagert sind. Infolge der Fliehkraft bei einer Rotationsbewegung der Schneidorgane 6 mit hoher Drehzahl gelangen die Mähklingen 10 in eine radial nach außen stehende Schneidstellung. Damit die Mähklingen 10 benachbarter Schneidorgane 6 nicht aneinander schlagen, sind die Schneidorgane 6 bezüglich einer durch die Anlenkpunkte 12,13 der Mähklingen 10 sich erstreckende Symmetrieebene 14 um 90 Grad gegeneinander versetzt angeordnet.

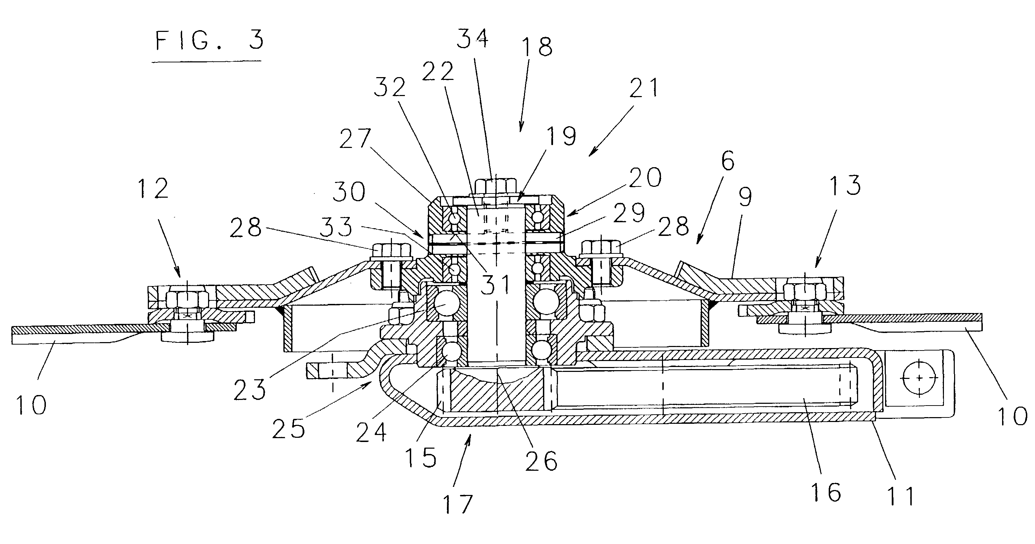

In einer in Fig.3 gezeigten Schnittdarstellung des Ausführungsbeispieles eines über einem Mähholm 11 angeordneten Schneidorganes 6 gemäß der Erfindung ist eine von dem im Mähholm 11 sich befindenden und als Zahnräder 15,16 (auch Fig.2) ausgebildeten Antriebsorgan 17 ausgehende Antriebsverbindung 18 zu dem Schneidorgan 6 veranschaulicht. Die Antriebsverbindung 18 beinhaltet dabei ein aus einem antreibenden Abschnitt 19 und aus einem angetriebenen Abschnitt 20 bestehendes Übertragungselement 21, welches die Antriebsverbindung 18 bei Überlast unterbricht. Der antreibende Abschnitt 19 wird dabei von einer Welle 22 gebildet, die in einer aus Rillenkugellager 23,24 bestehenden Lagerung 25 des Mähholmes 11 um die vertikale Achse 26 drehbar gelagert ist und fest mit einem der Zahnräder 15 des Antriebsorganes 17 verbunden ist. Der angetriebene Abschnitt 20 des Übertragungselementes 21 besteht aus einer Nabe 27, an der das als Mähteller 9 ausgeführte Schneidorgan 6 mittels Befestigungsschrauben 28 angebracht ist. Die Verbindung der Nabe 27 mit der Welle 22 erfolgt über ein als Spannhülse 29 ausgeführtes Abschersicherungselement 30, das in einer gemeinsamen Aufnahmebohrung 31 eingepreßt ist. Damit im Falle einer Unterbrechung der Antriebsverbindung 18 (Abscheren der Spannhülse 29) an den Berührungsstellen zwischen der Nabe 27 und der Welle 22 keine Beschädigungen auftreten, ist die Nabe 27 gegenüber der Welle 22 mit Wälzlager 32,33 gelagert, welche beidseitig von der Spannhülse 29 angeordnet sind und vorzugsweise als Rillenkugellager ausgeführt sind. Als zusätzliche axiale Sicherung während einer Unterbrechung der Antriebsverbindung 18 dient eine von der Oberseite der Welle 22 eingedrehte Befestigungsschraube 34, so daß das Schneidorgan 6 sich auch bei abgescherter Spannhülse 29 nicht ungewollt von der Welle 22 lösen kann.

Gemäß einem weiteren vorteilhaften Aspekt der Erfindung ist es vorgesehen, die Lage der als Abschersicherungselement 30 verwendeten Spannhülse 29 in Bezug zu den Befestigungsschrauben 28 des als Mähteller 9 ausgebildeten Schneidorganes 6 auf der Nabe 22 so zu wählen, daß ein Austritt der Spannhülse 29 aus der Aufnahmebohrung 31 der Nabe 22 im montierten Zustand der Befestigungsschrauben 28 nicht möglich ist (Fig.2 und 3).

In einer Weiterbildung der Erfindung ist es auch vorstellbar, ein Übertragungselement 21 als Verbindungselement zwischen dem Zahnrad 15 und der Welle 22 einzusetzen, so daß dadurch das Übertragungselement 21 innerhalb des Mähholmes 11 (Umgebung mit sicherer Schmierung) untergebracht ist.

## Patentansprüche

1. Mähmaschine mit einer Anzahl auf einem Mähholm (11) angebrachter, um eine in etwa vertikale Achse (26) rotierender Schneidorgane (6), welche an ihrem Umfang zumindest zwei drehbeweglich angeordnete, infolge der Fliehkraft radial nach außen stehende und eine Schneidwirkung erzeugende Schneidwerkzeuge aufweisen, wobei benachbarte Schneidorgane (6) bezüglich der Anordnung der Schneidwerkzeuge um einen vorgegebenen Drehwinkel gegeneinander versetzt sind und die Schneidwerkzeuge benachbarter Schneidorgane (6) sich überschneidende Bahnen beschreiben, mit die rotierenden Schneidorgane (6) von unten antreibenden, im Mähholm (11) untergebrachten und Zahnräder umfassenden Antriebsorganen, wobei jedes von unten rotierend angetriebene Schneidorgan (6) über eine um die entsprechende vertikale Achse (26) rotierende und in einer im Mähholm (11) untergebrachten Lagerung (25) geführten Welle (22) mit einem der Zahnräder (15) der Antriebsorgane (17) in fester Antriebsverbindung steht, **dadurch gekennzeichnet,** daß die jeweilige Antriebsverbindung (18) von dem im Mähholm (11) angeordneten Antriebsorgan (17) zu dem Schneidorgan (6) ein die Antriebsverbindung (18) bei Überlast unterbrechendes Übertragungselement (21) aufweist, welches so ausgebildet ist, daß der angetriebene Abschnitt (20) des Übertragungselementes (21) gegenüber dem antreibenden Abschnitt (19) des Übertragungselementes (21) im unterbrochenen Zustand der Antriebsverbindung (18) drehbar gelagert ist.

2. Mähmaschine nach Anspruch 1, **dadurch gekennzeichnet,** daß das Übertragungselement (21) als Verbindungselement zwischen dem als Welle (22) ausgeführten antreibenden Abschnitt (19) und dem als Nabe (27) des Schneidorganes (6) ausgebildeten angetriebenen Abschnitt (20) angeordnet ist.

3. Mähmaschine nach Anspruch 1, **dadurch gekennzeichnet**, daß das Übertragungselement (21) als Verbindungselement zwischen dem als Zahnrad (15) ausgebildeten antreibenden Abschnitt (19) und dem als Welle (22) ausgeführten angetriebenen Abschnitt (20) untergebracht ist.

4. Mähmaschine nach einem der Ansprüche 1 bis 3, **dadurch gekennzeichnet,** daß der antreibende Abschnitt (19) und der angetriebene Abschnitt (20) des Übertragungselementes (21) durch ein Abschersicherungselement (30) miteinander verbunden sind.

5. Mähmaschine nach einem der Ansprüche 1 bis 4, **dadurch gekennzeichnet,** daß der antreibende Abschnitt (19) und der angetriebene Abschnitt (20) des Übertragungselementes (21) vorzugsweise durch eine Spannhülse (29) miteinander verbunden sind.

6. Mähmaschine nach einem der Ansprüche 1 bis 5, **dadurch gekennzeichnet,** daß der angetriebene Abschnitt (20) des Übertragungselementes (21) gegenüber dem antreibenden Abschnitt (19) des Übertragungselementes (21) durch Wälzlager (32,33) drehbar gelagert ist.

7. Mähmaschine nach Anspruch 6 **dadurch gekennzeichnet,** daß die Wälzlager (32,33) beidseitig von dem Abschersicherungselement (30) angeordnet sind.

8. Mähmaschine nach einem der Ansprüche 4 bis 7, **dadurch gekennzeichnet,** daß die Lage des Abschersicherungselementes (30) des Übertragungselementes (21) in Bezug zu Befestigungsschrauben (28) des als Mähteller (9) ausgeführten Schneidorganes (6) so gewählt ist, daß ein Austritt des Abschersicherungselementes (30) aus der Aufnahmebohrung (31) verhindert wird.

## Claims

1. A mowing machine with, mounted on a mower spar (11) and adapted to rotate about a substantially vertical axis (26), a number of cutting members (6) which have on their periphery at least two rotatingly movable cutting tools which, as a result of centrifugal force, project radially outwardly and create a cutting action whereby adjacent cutting members (6) are offset against one another by a given angle of rotation in relation to the disposition of the cutting tools and in that the cutting tools of adjacent cutting members (6) describe overlapping paths, with drive means comprising gearwheels and accommodated in the mower spar (11) to drive the rotating cutting members (6) from underneath, whereby each cutting member (6) which is driven rotatingly from underneath is in fixed drive connection with one of the gearwheels (15) of the drive members (17) via a mounting (25) accommodated in the mower spar (11) and rotating about the corresponding vertical axis (26), characterised in that the respective drive connection (18) of the drive member (17) accommodated in the mower spar (11) to the cutting member (6) has a transmission element (21) which, in the event of an overload, brakes the drive connection (18) and which is so constructed that the driven portion (20) of the transmission element (21) in comparison with the driving portion (19) of the transmission element (21) is mounted to be rotatable in the interrupted condition of the drive connection (18).

2. A mowing machine according to claim 1, characterised in that the transmission element (21) is disposed as a connecting element between the driving portion (19) which is constructed as a shaft (22) and the driven portion (20) which is constructed as the hub (27) of the cutting member (6).

3. A mowing machine according to claim 1, characterised in that the transmission element (21) is accommodated as the connecting element between the driving portion (19) which is constructed as a gearwheel (15) and the driven portion (20) which is constructed as a shaft (22).

4. A mowing machine according to one of claims 1 to 3, characterised in that the driving portion (19) and the driven portion (20) of the transmission element (21) are connected to each other by a shear-preventing element (30).

5. A mowing machine according to one of claims 1 to 4, characterised in that the driving portion (19) and the driven portion (20) of the transmission element (21) are preferably connected to each other by a clamping sleeve (29).

6. A mowing machine according to one of claims 1 to 5, characterised in that the driven portion (20) of the transmission element (21) is, in comparison with the driven portion (19) of the transmission element (21), mounted to rotate by means of rolling bearings (32, 33).

7. A mowing machine according to claim 6, characterised in that the rolling bearings (32, 33) are disposed on both sides of the shear-preventing element (30).

8. A mowing machine according to one of claims 4 to 7, characterised in that the position of the shear-preventing element (30) of the transmission element (21) is so chosen with regard to fixing screws (28) of the cutting member (6) which is constructed as a mowing plate (9) that emergence of the shear-preventing element (30) from the housing bore (31) is prevented.

## Revendications

1. Faucheuse comportant un certain nombre d'organes de coupe (6), rotatifs autour d'axes (26) sensiblement verticaux, installés sur une barre de fauche (11), ces organes ayant à leur périphérie au moins deux couteaux mobiles en rotation, et venant radlalement en saillie sous l'effet de la force centrifuge pour avoir une action de fauche,
les organes de coupe voisins (6) étant décalés angulairement l'un par rapport à l'autre pour la disposition des couteaux, et les couteaux d'organes de coupe voisins (6) décrivant des trajectoires qui se chevauchent, ainsi que
des organes d'entraînement comportant des roues dentées, logées dans la barre de fauche (11), ct entraînant par en dessous les organes de coupe (6) rotatifs, chacun des organes de coupe (6) entraînés en rotation par en dessous, étant en coopération d'entraînement rigide par un arbre (22) tournant autour de l'axe vertical (26) correspondant, et guidé dans un palier (25) logé dans la barre de fauche (11), avec l'une des roues dentées (15) des organes d'entraînement (17),
caractérisée en ce que
la liaison d'entraînement (18) respective de l'organe d'entraînement (17) logé dans la barre de fauche (11) vers l'organe de coupe (6) comporte un élément de transmission (21) qui, en cas de surcharge, coupe la liaison d'entrainement (18), ct qui est réalisé de sorte que, lorsque la liaison d'entraînement (18) est coupée, le segment entraîné (20) de l'élément de transmission (21) soit monté à rotation par rapport au segment d'entraînement (19) de l'élément de transmission (21).

2. Faucheuse selon la revendication 1,
caractérisée en ce que
l'élément de transmission (21) est prévu comme élément de liaison entre le segment d'entrainement (19) réalisé comme arbre (22) et le segment entrainé (20) réalisé comme moyeu (27) de l'organe de coupe (6).

3. Faucheuse selon la revendication 1,
caractérisée en ce que
l'élément de transmission (21) est un élément de liaison logé entre le segment d'entraînement (19) réalisé comme roue dentée (15) et le segment entrairié (20) réalisé comme arbre (22).

4. Faucheuse selon l'une quelconque des revendications 1 à 3,
caractérisée en ce que
le segment d'entraînement (19) et le segment entraîné (20) de l'élément de transmission (21) sont reliés par un élément de protection par cisaillement (30).

5. Faucheuse selon l'une quelconque des revendications 1 à 4,
caractérisée en ce que
le segment d'entrainement (19) et le segment entraîné (20) dc l'élément de transmission (21) sont reliés de préférence par un manchon de serrage.

6. Faucheuse selon l'une quelconque des revendications 1 à 5,
caractérisée en ce que
lc segment entraîné (20) de l'élément de transmission (21) est monté à rotation par rapport au segment d'entrainement (19) de l'élément de transmission (21) par l'intermédiaire de paliers à roulement (32, 33).

7. Faucheuse selon la revendication 6,
caractérisée en ce que
les paliers à roulement (32, 33) sont prévus, de part et d'autre de l'élément de cisaillement (30).

8. Faucheuse selon l'une quelconque des revendications 4 à 7,
caractérisée en ce que
la position de l'élément de cisaillement (30) de l'élément de transmission (21) par rapport aux vis de fixation (28) de l'organe de coupe (6) en Corme de disque de fauche (9) est telle qu'elle évite une sortie de l'élément de cisaillement (30) hors du perçage de réception (31).
